# EUROPÄISCHE PATENTSCHRIFT

(11) **EP 2 240 313 B1**
(45) Veröffentlichungstag und Bekanntmachung des Hinweises auf die Patenterteilung: **28.09.2011**
(21) Anmeldenummer: 09709489.0
(22) Anmeldetag: 12.02.2009
(51) Int. Cl.: B29C 67/00

(54) **VORRICHTUNG UND VERFAHREN ZUR GENERATIVEN HERSTELLUNG VON 3-DIMENSIONALEN OBJEKTEN AUF DER BASIS EINES MULTIPHASENSYSTEMS**
DEVICE AND METHOD FOR THE GENERATIVE PRODUCTION OF THREE-DIMENSIONAL OBJECTS ON THE BASIS OF A MULTIPHASE SYSTEM
PROCÉDÉ ET DISPOSITIF GÉNÉRATIFS DE PRODUCTION D'OBJETS TRIDIMENSIONNELS SUR LA BASE D'UN SYSTÈME MULTIPHASE

(30) Priorität: 13.02.2008 DE 102008009003
(43) Veröffentlichungstag der Anmeldung: 20.10.2010
(73) Patentinhaber: Dreve ProDiMed GmbH, 59423 Unna (DE)
(72) Erfinder: KLARE, Martin, 44227 Dortmund (DE); GISCHER, Frank, 58708 Menden (DE); BRICK, Uwe, 07749 Jena (DE)
(74) Vertreter: Köchling, Conrad-Joachim
(86) Internationale Anmeldenummer: PCT/DE2009/000187
(87) Internationale Veröffentlichungsnummer: WO 2009/100712

(56) Entgegenhaltungen:
- JP-A- 8 252 866
- US-A- 5 573 721

## Beschreibung

Es wird eine Vorrichtung und ein Verfahren zur Herstellung eines dreidimensionalen Objektes durch aufeinander folgendes schichtweises Verfestigen eines mittels elektromagnetischer Strahlung verfestigbaren Materials beschrieben, bei dem sich im so genannten Vat ein mindestens n-Phasensystem mit n≥2 befindet, von denen mindestens eine Phase das Baumaterial und mindestens eine andere mit dem Baumaterial nicht mischbare Phase enthält. Dabei wird im Sinne der Erfindung unter "nicht mischbar" verstanden, dass eine definierte Phasengrenze zwischen mindestens 2 der o.g. Phasen ausgebildet wird. Geeigneterweise kann die Schichtdicke mindestens einer der Phasen mittels einer Pumpe variiert bzw. bei Verbrauch der Phase, die das Baumaterial enthält, gesteuert werden. Ferner wird ein aktives oder passives System zur Beschichtung eingesetzt.

Für den schichtweisen Aufbau dreidimensionaler Objekte aus "strahlungshärtenden" Photopolymeren werden in der Literatur unterschiedlichste Verfahren beschrieben, siehe hierzu "Generative Fertigungsverfahren" von A. Gebhardt 3. Aufl. 2007 (ISBN 978-3-446-22666-1). Durch stetige Weiterentwicklungen der Verfahren und

Materialien werden generative Fertigungsverfahren heutzutage nicht mehr nur zur schnellen Herstellung von Prototypen (Rapid Prototyping) sondern zunehmend im Bereich Rapid Manufacturing eingesetzt (Klare, Martin; Altmann, Reiner: Rapid Manufacturing in der Hörgeräteindustrie in: RTejournal - Forum für Rapid Technologie, 2. Ausgabe, 2(2005), Mai 2005, ISSN 1614-0923, URN urn:nbn:de:0009-2-1049, URL:http://www.rtejournal.de/aktuell/archiv/ausg abe2/104/).

Neben ihrer Robustheit gelten hier auch besondere Anforderungen an die Wirtschaftlichkeit der verwendeten Verfahren. Diese ist u.a. eng mit den Kosten für die Baumaterialien und den notwendigen Nachbearbeitungsprozessen verbunden. Die vorliegende Erfindung stellt dabei eine Vorrichtung und ein Verfahren zur Verfügung, das im Vergleich der zum Stande der Technik bekannten Schichtbauverfahren insbesondere im Hinblick auf die wirtschaftliche Herstellung von 3 dimensionalen Objekten wesentliche Vorteile besitzt. Für die generative Herstellung von 3 dimensionalen Objekten aus "strahlungshärtenden" "Photopolymeren" kommen heutzutage im wesentlichen Verfahren auf Basis einer Belichtung durch einen Laser (Stereolithographie, im folgenden als SLA bezeichnet), durch einen Multimedia Projektor, ein LC-Display (reflexiv, transmissiv), LED-, bzw. Laser-Dioden-Zeile (die orthogonal zur Zeile über die Schicht bewegt wird) oder durch Lichtventil-Technik (MEMS) zum Einsatz.

Diese Verfahren werden in einer Reihe von Patenten beschrieben wie:
US 4,575,330 von C. Hull "Apparatus for production of three-dimensional objects by stereolithography" und US 4,999,143 von C. Hull et. al "Methods and apparatus for production of three-dimensional objects by stereolithography", in US005247180 A "Stereolithographic apparatus and method of use" von Texas Instruments Inc., in US 005980813 A "Rapid Prototyping using multiple materials" von SRI International und
in DE G 9319405.6 "Vorrichtung zur Herstellung eines dreidimensionalen Objektes nach dem Prinzip der Photoverfestigung" vom Forschungszentrum Informatik an der Universität Karlsruhe. Nach einem ähnlichen Verfahren wird in DE 29911122 U1 "Vorrichtung zum Herstellen eines 3-dimensionalen Objektes" der Fa. Deltamed eine Anwendung zur Herstellung dreidimensionaler Bauteile beansprucht. Ferner sind EP 1250995A "Vorrichtung zum Herstellen eines dreidimensionalen Objektes" der Fa. Envision Technologies, "Rapid-Prototyping-Vorrichtung und Rapid-Prototyping-Methode" DE69909136T der Fa. DICON AS Lystrup,
WO 01/00390 A von HAP, Sitec Industrietechnologie und Deltamed Medizinprodukte, sowie WO 2005/110722 A der Fa. Envisiontec von Relevanz. Die technischen Unterschiede der o.g. Verfahren lassen sich im Wesentlichen durch die Art der Belichtung charakterisieren. Bei den Systemen, die einen Laser zur Polymerisation verwenden, wird der Laserstrahl über die entsprechend auszuhärtende Querschnittsfläche gefahren. Die Konturen der auszuhärtenden Querschnittsfläche können vom Laserstrahl als Kurve gescannt werden. Dies gilt exemplarisch für die Stereolithographieanlage Viper Pro^{®} der Fa. 3d Systems. Bei diesen Systemen befindet sich das Baumaterial in Form einer niedrigviskosen Harzformulierung in einem so genannten Vat. Diese Vats können in kommerziell erhältlichen Varianten Volumina bis zu 1,2 m³ besitzen. Die zum ersten Auffüllen eines Vats benötigte Harzmenge, auch als initial fill bezeichnet, stellt bei der Anschaffung eines solchen Systems einen wesentlichen Kostenfaktor dar und dementsprechend kann dieses Verbrauchsmaterial bis zu 75% der Maschinenkosten betragen. Da die Harzmenge des initial fill unabhängig von denen für die Bauteile benötigten Harzmengen ist, stellt der initial fill so genanntes "totes Kapital" dar. Unter wirtschaftlichen Gesichtspunkten ist dies als hemmend zu betrachten und stellt gerade im Hinblick auf Rapid Manufacturing Prozesse einen Nachteil dar. Darüber hinaus können solche Harzmischungen durch z.B. Streustrahlung der eingesetzten Laser, durch mechanische und thermische Belastungen, durch Verunreinigungen aus der Produktionsumgebung und durch z.B. nicht vollständig ausgehärtetes Material an der Oberfläche der zu entnehmenden Bauteile über einen längeren Zeitraum ihre chemisch physikalischen Werte verändern. In einigen Fällen findet ein so bezeichnetes "Umkippen" des Vats, d.h. Prepolymerisation des Baumaterials, statt. Aus den o.g. Gründen wird so jedoch die Robustheit des Verfahrens entscheidend eingeschränkt und entweder Bauteile nicht oder mit nicht gewünschten chemisch physikalischen Eigenschaften erhalten. Bei Rapid Manufacturing Prozessen auf Basis der Sterelithographie wird deshalb heutzutage der "initial fill" turnusmäßig gewechselt, um ein "Umkippen" des Harzes und die damit einhergehenden Verzögerungen im Bauprozess und den erhöhten Kostenaufwand zu vermeiden. Dies ist unter Gesichtspunkten der Robustheit des Produktionsprozesses und der Wirtschaftlichkeit solcher Verfahren nicht wünschenswert.

Im Gegensatz zu den Systemen auf Basis von Lasern werden bei Systemen basierend auf Maskenprojektion, wie z.B. der Perfactory^{®}-Serie der Fa. Envisiontec oder die V-Flash der Fa. 3d Systems, immer ganze Schichten auf einmal belichtet. Dabei wird beispielsweise bei der Perfactory eine Bauplattform von oben in das Vat getaucht, ein definierter Abstand zwischen Bauplattform und Boden eingestellt und anschließend durch den Boden des Vats belichtet. Zwischen Bauteil und Vatboden treten dabei hohe Adhäsionskräfte auf, die zu einem Abreißen des Bauteils von der Plattform bzw. der unterstützenden Struktur führen können. Deshalb wird nach dem Belichten daraufhin der Vat mittels einer Kippbewegung von der gebauten Schicht gelöst. Beim V-Flash-Verfahren wird das Material mit der so genannten FTI-Technologie über einen Film unter die Bauplattform gefahren. Auch hier wird nach der Belichtung eine Kippbewegung der Bauplattform vollzogen. Bei beiden Verfahren ist diese Kippbewegung notwendig, um die Abzugskräfte zwischen Bauteil und Vatboden bzw. Film zu minimieren. Trotz dieser Vorgehensweise ist es notwendig, durch eine massive unterstützende Struktur, so genannte Supports, ein Lösen der gebildeten Schicht von der Bauplattform zu vermeiden. Diese Supportkonstruktionen müssen aus o.g. Grund im Vergleich zur Stereolithographie stärker mit dem Bauteil verbunden sein. Entsprechend lässt sich die Supportstrutur schlechter nach Beendigung des Baujobs vom Bauteil lösen. Dementsprechend ist ein größerer Nachbearbeitungsaufwand notwendig. Dies ist jedoch unter wirtschaftlichen Gesichtspunkten nicht wünschenswert.

Darüber hinaus müssen die mittels der o.g. generativen Fertigungsverfahren erzeugten 3 dimensionalen Objekte nach dem Bauprozess und dem Entfernen der Supportstruktur mit einem Lösungsmittel gereinigt und anschließend in einer separaten Nachbelichtungsquelle endausgehärtet werden. Im Sinne eines kostengünstigen Gesamtprozesses ist es deshalb ferner wünschenswert, gegebenenfalls auf diese Schritte verzichten, bzw. diese in das Maschinenkonzept integrieren zu können.

Ein Verfahren beziehungsweise eine Vorrichtung gemäß Oberbegriff der Ansprüche 1 und 2 ist aus der US-A-5,573,721 bekannt.
Nachgeschaltete Endaushärtungsverfahren nach einem Verfahren zur Herstellung schichtweiser Objekte sind allgemein bekannt.

Die JP 08 252 866 A beschreibt ein derartiges Verfahren, wobei eine Strahlungsquelle die Hilfsmittelphase für die Endaushärtung des generierten Objektes bestrahlt und eine Hilfsmittelphase dort transparent ist für elektromagnetische Strahlung im Spektralbereich des Absorptionsspektrums des Photoinitiators.

Dies ist zwar in der JP 08 252 866 A der Fall, jedoch wird dort der Endaushärtungsprozess separat durchgeführt.

Aufgabe der vorliegenden Erfindung ist es, eine Vorrichtung und ein Verfahren zur Herstellung von 3-dimensionalen Objekten durch aufeinander folgendes schichtweises Verfestigen eines mittels elektromagnetischer Strahlung verfestigbaren Materials bereitzustellen, bei dem die o.g. Nachteile der dem Stande der Technik entsprechenden Verfahren im Hinblick auf Robustheit und Wirtschaftlichkeit minimiert bzw. nicht vorhanden sind. Dies wird verfahrensgemäß dadurch erreicht, dass die Hilfsmittelphase für elektromagnetische Strahlung im Spektralbereich des Absorptionsspektrums des Photoinitiators des verfestigbaren Baumaterials transparent ist und eine für die Endaushärtung des generierten Objektes geeignete Strahlungsquelle die Hilfsmittelphase bestrahlt. Vorrichtungsgemäß wird die Aufgabe gemäß Anspruch 2 gelöst.

Die erfindungsgemäße Vorrichtung und das Verfahren erlauben es, die benötigte Menge an Baumaterial in der generativen Fertigungsanlage auf ein Minimum zu reduzieren. Ferner ist es während des Bauprozesses nicht notwendig, eine belichtete Schicht von einem Substrat wie beispielsweise einem Vatboden oder einer Folie zu trennen. Somit können die o.g. Adhäsionskräfte vermieden werden. Dementsprechend führt die beanspruchte Vorrichtung und das beanspruchte Verfahren zu einem robusteren, mit weniger Nacharbeitung verbundenem und somit letztendlich wirtschaftlicheren generativen Fertigungsprozess, der insbesondere im Bereich des Rapid Prototyping vorzugsweise eingesetzt werden kann.

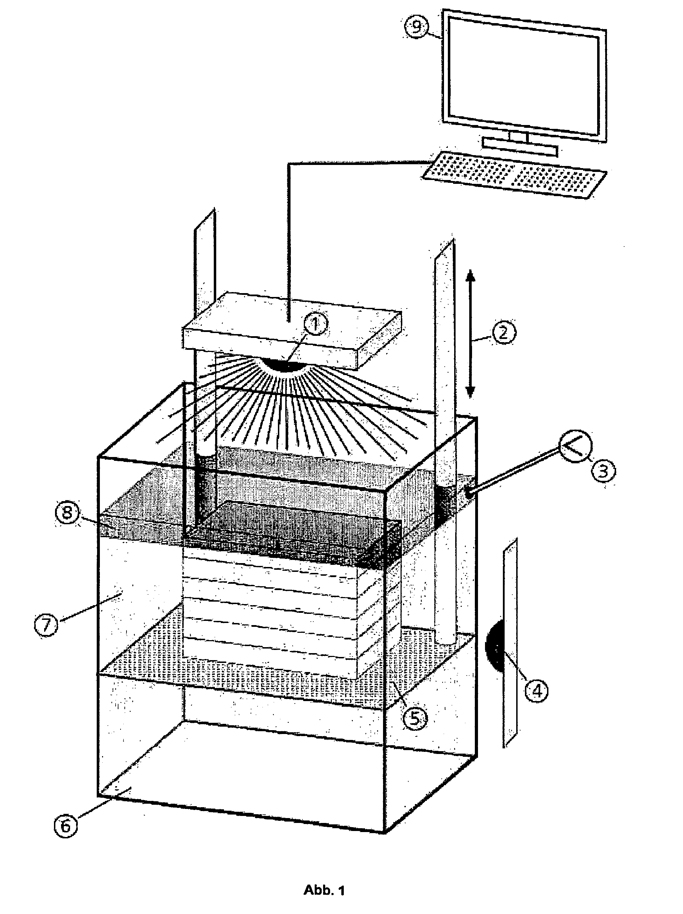

Eine erfindungsgemäße Ausführungsform ist in Abb.1 für ein 2-Phasenssystem dargestellt. Die Vorrichtung besteht (1) aus einer Bestrahlungsquelle, die z.B. ein Laser oder ein Bildprojektionssystem sein kann. Andere Energieeintragsquellen sind im Sinne der Erfindung ausdrücklich nicht ausgenommen. Die Bauplattform (5) befindet sich an einer verfahrbaren Aufnahme (2) und kann so während des Bauprozesses gesteuert (9) schichtweise im Vat (6) verfahren werden. Die Phase mit dem Baumaterial (8) kann mit Hilfe einer Pumpe (3) dosiert werden. Dabei kann entweder vor und während des Bauprozesses Baumaterial im Überschuss, das heißt eine Baumaterialmenge, die größer der Baumaterialmenge für eine Schicht ist, oder immer nur die für eine Schicht benötigte Menge zugegeben werden. In einer bevorzugten Ausführungsform kann das Baumaterial nach dem Bau abgepumpt werden, so dass sich das generierte Objekt in der Hilfsphase (7) befindet. Gemäß der Erfindung wird dann über eine entsprechende Bestrahlungsquelle (4) das Objekt endausgehärtet. Dies ist im Vergleich zum Stande der Technik als sehr vorteilhaft zu bewerten, da durch das Absenken des Bauteils in eine mit dem Baumaterial nicht mischbare Phase das überschüssige Baumaterial aus dem Bauteil bzw. der Hilfsphase in die Baumaterialphase transportiert wird. Entsprechend kann so beim Rapid Manufacturing auf einen Reinigungsschritt der Bauteile verzichtet werden. Darüber hinaus wird das generierte Bauteil in einer Phase ohne Sauerstoffzutritt ausgehärtet. Somit kann inhibierungsfrei ausgehärtet werden. Dies ist insbesondere bei der Herstellung von Medizinprodukten, deren Aushärtung in den meisten Fällen auf einer radikalischen Polymerisation beruht, vorteilhaft.

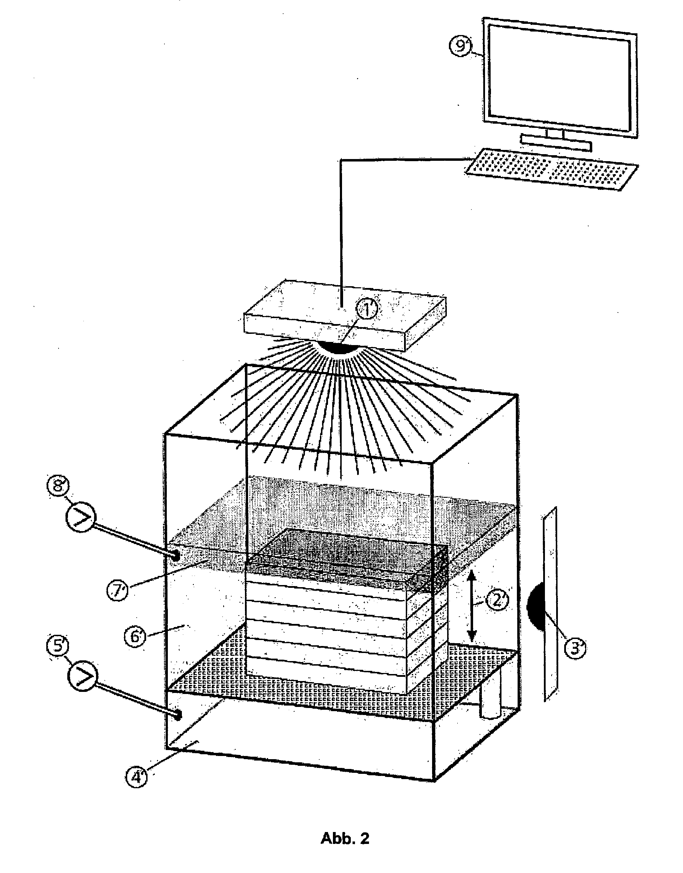

Eine weitere erfindungsgemäße Ausführungsform ist in Abb.2 für ein 2-Phasenssystem dargestellt, bei dem die Baumaterialphase (7') mit einer Pumpe (8') und die Hilfsphase (6') mit einer Pumpe (5') in das Vat (4') dosiert werden können. Die Vorrichtung besteht weiterhin (1') aus einer Bestrahlungsquelle, die z.B. ein Laser oder ein Bildprojektionssystem sein kann. Andere Energieeintragsquellen sind im Sinne der Erfindung ausdrücklich nicht ausgenommen.

Die Bauplattform ist hierbei fixiert. Während des Bauprozesses wird der Flüssigkeitsspiegel durch Dosierung mittels der Pumpen gesteuert (9'). Durch bspw. das Zufügen des Volumens einer Schicht an Hilfsmittelphase (2') wird so eine um eine Schicht erhöhte Projektionsebene an Baumaterial geschaffen. Durch Berechnung der Belichtungsparameter hinsichtlich Gain und Fokus kann dann die nächste Schicht mittels der Bestrahlungsquelle (1') polymerisiert werden. Dabei kann entweder vor und während des Bauprozesses Baumaterial im Überschuss, das heißt eine Baumaterialmenge, die größer der Baumaterialmenge für eine Schicht ist, oder immer nur die für eine Schicht benötigte Menge zugegeben werden. In einer bevorzugten Ausführungsform kann das Baumaterial nach dem Bau abgepumpt werden, so dass sich das generierte Objekt in der Hilfsphase (6') befindet. Über eine entsprechende Bestrahlungsquelle (3') wird das Objekt endausgehärtet. Dies ist im Vergleich zum Stande der Technik als sehr vorteilhaft zu bewerten, da durch das Absenken des Bauteils in eine mit dem Baumaterial nicht mischbare Phase das überschüssige Baumaterial aus dem Bauteil bzw. der Hilfsphase in die Baumaterialphase transportiert wird. Entsprechend kann so beim Rapid Manufacturing auf einen Reinigungsschritt der Bauteile verzichtet werden. Darüber hinaus wird das generierte Bauteil in einer Phase ohne Sauerstoffzutritt ausgehärtet. Somit kann inhibierungsfrei ausgehärtet werden. Dies ist insbesondere bei der Herstellung von Medizinprodukten, deren Aushärtung in den meisten Fällen auf einer radikalischen Polymerisation beruht, vorteilhaft.

Im Sinne der Erfindung ist ferner für die Ausführungsformen nicht ausgeschlossen, dass ein aktives oder passives Beschichtungssystem, wie es dem Fachmann bekannt ist, zum Einsatz kommt.

Unter dem Begriff nicht mischbar wird im Sinne der Erfindung eine praxisbezogene Interpretation verstanden. D. h. zwischen mindestens 2 Phasen existiert ein Bereich von Mischungsverhältnissen, der zur Ausbildung einer Schichtung von zwei flüssigen Phasen führt.

Ein solches Beispiel für ein 2- Phasensystem ist in Tab. 1 wiedergegeben.

**Tab. 1 Beispiel 1**

| **Komponenten Baumaterialphase** | **Komponenten Hilfsmittelphase** |
|---|---|
| **88,8**% m/m (Octahydro-4,7-methano-1H-indenediyl)bis(methylene) diacrylate | **86** % 1,2,3-Propanetriol |
| **10** % m/m TEGDMA, 2,2'-Ethylenedioxydiethyl dimethacrylate | **14** % H₂O |
| **1** % m/m Campherchinon | |
| **0,2** % m/m Campherchinon | |

Andere Systeme mit n≥2 Phasen sind erfindungsgemäß ausdrücklich nicht ausgeschlossen.

Insbesondere kann auch vorgesehen sein, dass die flüssigen Phasen unterschiedliche Dichte haben, so dass die Phasen aufgrund des Dichteunterschiedes übereinander geschichtet werden können.

## Patentansprüche

1. Verfahren zur Herstellung eines dreidimensionalen Objektes durch aufeinander folgendes schichtweises Verfestigen eines mittels elektromagnetischer Strahlung (1) flüssigen verfestigbaren Baumaterials (8), bei dem sich in einem Vat (6) ein mindestens n-Phasensystem mit n≥2 befindet, von denen mindestens eine Phase das flüssige Baumaterial (8) und mindestens eine andere mit dem Baumaterial nicht mischbare flüssige Hilfsmittelphase (7) enthält und die Schichtdicke mindestens einer der Phasen mittels einer Pumpe (3) variiert oder bei Verbrauch der Phase, die das Baumaterial (8) enthält, gesteuert wird und ferner ein aktives oder passives System zur Beschichtung eingesetzt wird, **dadurch gekennzeichnet, dass** die Hilfsmittelphase (7) für elektromagnetische Strahlung im Spektralbereich des Absorptionsspektrums eines Photoinitiators des verfestigbaren Baumaterials (8) transparent ist und eine für die Endaushärtung des generierten Objektes geeignete Strahlungsquelle (4) die Hilfsmittelphase bestrahlt.

2. Vorrichtung zur Herstellung eines dreidimensionalen Objektes durch aufeinander folgendes schichtweises Verfestigen eines mittels elektromagnetischer Strahlung (1) flüssigen verfestigbaren Baumaterials (8), bei dem sich in einem Vat ein mindestens n-Phasensystem mit n≥2 befindet, von denen mindestens eine Phase das flüssige Baumaterial und mindestens eine andere mit dem Baumaterial nicht mischbare flussige Hilfsmittelphase (7) enthält und die Schichtdicke mindestens einer der Phasen mittels einer Pumpe (3) variiert oder bei Verbrauch der Phase, die das Baumaterial (8) enthält, gesteuert werden kann und ferner ein aktives oder passives System zur Beschichtung eingesetzt wird, **dadurch gekennzeichnet, dass** die Hilfsmittelphase (7) für elektromagnetische Strahlung im Spektralbereich des Absorptionsspektrums eines Photoinitiators des verfestigbaren Baumaterials (8) transparent ist und eine für die Endaushärtung des generierten Objektes geeignete Strahlungsquelle (4) die Hilfsmittelphase bestrahlt.

## Claims

1. A method of producing a three-dimensional object by the successive strengthening in layers of a liquid structural material (8) capable of being strengthened by means of electromagnetic radiation (1), in which an at least n-phase system with n ≥ 2 is present in a vat (6), of which at least one phase contains the liquid structural material (8) and at least one other liquid auxiliary agent phase (7) not miscible with the structural material and varies the layer thickness of at least one of the phases by means of a pump (3) or is controlled when the phase which contains the structural material (8) is consumed and in addition an active or passive system is used for the coating, **characterized in that** the auxiliary agent phase (7) for electromagnetic radiation is transparent in the spectral range of the absorption spectrum of a photoinitiator of the structural material (8) capable of being strengthened, and a radiation source (4) suitable for the final curing of the generated object irradiates the auxiliary agent phase.

2. An apparatus for producing a three-dimensional object by the successive strengthening in layers of a liquid structural material (8) capable of being strengthened by means of electromagnetic radiation (1), in which an at least n-phase system with n ≥ 2 is present in a vat, of which at least one phase contains the liquid structural material and at least one other liquid auxiliary agent phase (7) not miscible with the structural material and varies the layer thickness of at least one of the phases by means of a pump (3) or can be controlled when the phase which contains the structural material (8) is consumed and in addition an active or passive system is used for the coating, **characterized in that** the auxiliary agent phase (7) for electromagnetic radiation is transparent in the spectral range of the absorption spectrum of a photoinitiator of the structural material (8) capable of being strengthened, and a radiation source (4) suitable for the final curing of the generated object irradiates the auxiliary agent phase.

## Revendications

1. Procédé de fabrication d'un objet tridimensionnel par solidification successive par couches d'un matériau de construction liquide (8) solidifiable au moyen d'un rayonnement électromagnétique (1), selon lequel un système à au moins n phases, avec n ≥ 2, se trouve dans une cuve (6), au moins une des phases contenant le matériau de construction liquide (8) et au moins une autre une phase auxiliaire liquide (7) non miscible avec le matériau de construction, et on fait varier l'épaisseur de couche d'au moins une des phases ou commande celle-ci en cas de consommation de la phase qui contient le matériau de construction (8) au moyen d'une pompe (3) et on utilise en outre un système actif ou passif pour l'application de couches, **caractérisé en ce que** la phase auxiliaire (7) est transparente pour le rayonnement électromagnétique dans le domaine spectral du spectre d'absorption d'un photoinitiateur du matériau de construction solidifiable (8) et une source de rayonnement (4) appropriée au durcissement final de l'objet généré irradie la phase auxiliaire.

2. Dispositif de fabrication d'un objet tridimensionnel par solidification successive par couches d'un matériau de construction liquide (8) solidifiable au moyen d'un rayonnement électromagnétique (1), dans lequel un système à au moins n phases, avec n ≥ 2, se trouve dans une cuve, au moins une des phases contenant le matériau de construction liquide et au moins une autre une phase auxiliaire liquide (7) non miscible avec le matériau de construction, et on peut faire varier l'épaisseur de couche d'au moins une des phases ou commander celle-ci en cas de consommation de la phase qui contient le matériau de construction (8) au moyen d'une pompe (3) et on utilise en outre un système actif ou passif pour l'application de couches, **caractérisé en ce que** la phase auxiliaire (7) est transparente pour le rayonnement électromagnétique dans le domaine spectral du spectre d'absorption d'un photoinitiateur du matériau de construction solidifiable (8) et une source de rayonnement (4) appropriée au durcissement final de l'objet généré irradie la phase auxiliaire.
